# FASCICULE DE BREVET EUROPEEN

(11) **EP 2 164 748 B1**
(45) Date de publication et mention de la délivrance du brevet: **12.01.2011**
(21) Numéro de dépôt: 08805921.7
(22) Date de dépôt: 03.06.2008
(51) Int. Cl.: B62D 65/18

(54) **SYSTEME POUR LIGNE DE PRODUCTION DE VEHICULES AUTOMOBILES COMPRENANT UNE BALANCELLE ET UNE SERVANTE EQUIPEES DE MOYENS DE COMMUNICATION**
MOTORFAHRZEUGPRODUKTIONSLINIENSYSTEM MIT EINEM AUFHÄNGUNGSRAHMEN UND EINEM WERKZEUGHALTER, DIE MIT KOMMUNIKATIONSMITTELN AUSGERÜSTET SIND
MOTOR VEHICLE PRODUCTION LINE SYSTEM COMPRISING A SUSPENSION FRAME AND A TOOL HOLDER WHICH ARE EQUIPPED WITH COMMUNICATION MEANS

(30) Priorité: 08.06.2007 FR 0755613
(43) Date de publication de la demande: 24.03.2010
(73) Titulaire: Peugeot Citroën Automobiles SA, 78140 Vélizy-Villacoublay (FR)
(72) Inventeur: DELOGET, Céline, F-78000 Versailles (FR)
(86) Numéro de dépôt international: PCT/FR2008/050978
(87) Numéro de publication internationale: WO 2008/152324

(56) Documents cités:
- WO-A-2005/014375
- JP-A- 2 250 755
- JP-A- 2003 072 608

## Description

L'invention concerne un système comprenant une balancelle destinée à porter un véhicule automobile et une servante portant une unité de commande ainsi qu'un ou plusieurs outillages manuels tels que visseuse ou séreuse pneumatique pilotés par cette unité, la balancelle et la servante étant destinées à être suspendues à des rails, des organes d'attelage de la servante à la balancelle, pour qu'un opérateur effectue une gamme d'opérations sur le véhicule pendant qu'il avance avec la servante le long des rails en utilisant un ou plusieurs outillages portés par la servante. Un tel système est généralement connu.

Sur une ligne de production équipée d'un tel système, les véhicules défilent les uns après les autres en étant portés chacun par une balancelle motorisée qui est par exemple pilotée par un automate programmable central, deux véhicules consécutifs n'étant pas nécessairement du même modèle.

Lorsqu'un véhicule est acheminé par une balancelle le long de la zone de travail de l'opérateur, la servante est attelée à cette balancelle pour former un ensemble qui avance conjointement le long des rails auxquels il est suspendu.

L'opérateur peut alors effectuer différents travaux au défilé, c'est-à-dire pendant que l'ensemble avance. Ces travaux correspondent à une gamme d'opérations qui est propre au modèle de véhicule porté par la balancelle.

Cette gamme comprend typiquement le serrage d'une ou plusieurs séries de vis à effectuer avec une ou plusieurs visseuses portées par la servante, ainsi qu'un ou plusieurs remplissages de fluide.

La servante qui se déplace avec le véhicule permet à l'opérateur d'avoir à portée de la main différents outils manuels tels que visseuse et/ou séreuse pneumatique qui sont alimentés, paramétrés et pilotés, depuis l'unité de commande portée par la servante.

Compte tenu des impératifs de production, l'opérateur dispose d'un temps limité pour effectuer cet ensemble d'opérations. Si toutes les opérations n'ont pas été réalisées dans le temps alloué, les opérations manquantes sont effectuées ultérieurement, hors ligne, par exemple à un poste ou atelier de reprise.

Avec ce système, si l'opérateur veut changer l'ordre des opérations ou si, par erreur, il utilise la mauvaise visseuse ou séreuse, aucun dispositif n'intervient pour l'en empêcher.

Le but de l'invention est de remédier à ces inconvénients en proposant un système assurant que la gamme d'opérations est effectivement respectée par l'opérateur lorsqu'il effectue les opérations au défilé.

A cet effet, l'invention a pour objet un système comprenant une balancelle destinée à porter un véhicule automobile et une servante portant une unité de commande et un ou plusieurs outillages manuels tels que visseuse ou séreuse pneumatique pilotés par cette unité de commande, la balancelle et la servante étant destinées à être suspendues à des rails, des organes d'attelage de la servante à la balancelle, pour qu'un opérateur effectue une gamme d'opérations sur le véhicule pendant qu'il avance avec la servante le long des rails en utilisant un ou plusieurs outillages portés par la servante, caractérisé en ce que la servante est équipée d'une unité de lecture d'une étiquette distante, en ce que la balancelle est équipée d'une étiquette lisible par cette unité de lecture, pour transférer depuis l'étiquette vers l'unité de commande, des données relatives au modèle du véhicule porté par la balancelle ou des données relatives à la gamme d'opérations devant être effectuée sur ce véhicule, afin de piloter le ou les outillages depuis l'unité de commande selon une séquence correspondant à la gamme d'opérations à effectuer.

L'invention concerne également un système tel que défini ci-dessus, dans laquelle l'unité de lecture communique avec l'étiquette par radiofréquence.

L'invention concerne également un système tel que défini ci-dessus, comprenant un détecteur pour identifier la présence de la balancelle au niveau de la servante, afin de déclencher automatiquement l'attelage de la servante à la balancelle et de déclencher automatiquement une lecture des informations contenues dans l'étiquette dès que la balancelle est au niveau de la servante.

L'invention concerne également un système tel que défini ci-dessus, dans lequel le détecteur de présence de la balancelle au niveau de la servante comprend une source lumineuse et un capteur portés par la servante et un réflecteur porté par la balancelle.

L'invention concerne également un système tel que défini ci-dessus, dans lequel les moyens d'attelage comprennent un organe mobile déplacé par un actionneur portés par la servante l'organe étant mobile entre une position d'attelage et une position libre, et dans lequel le détecteur, l'unité de lecture et l'actionneur sont reliés à l'unité de commande.

L'invention sera maintenant décrite plus en détail, et en référence aux figures annexées.
La figure 1 est une vue d'ensemble d'une portion de ligne de production équipée du système selon l'invention ;
La figure 2 est une vue latérale schématique de la servante du système selon l'invention ;
La figure 3 montre deux étiquettes réinscriptibles portées par la balancelle et la servante du système selon l'invention ;
La figure 4 montre l'organe d'attelage de la servante à la balancelle dans le système selon l'invention.

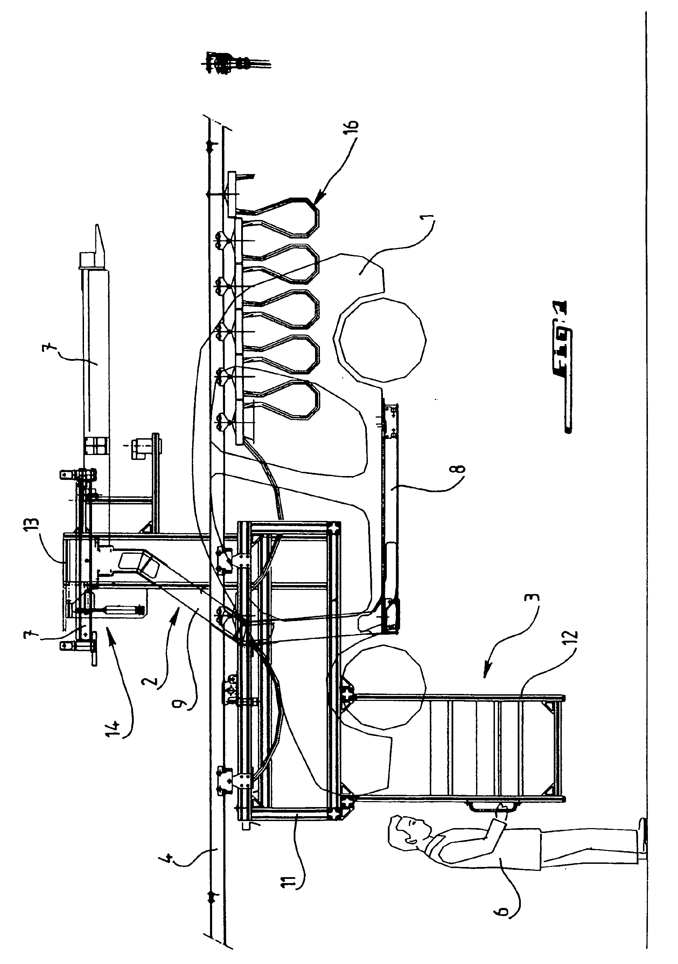

Dans la figure 1, une portion de ligne de production comprend un véhicule 1 porté par une balancelle 2 suspendue à des rails non représentés, et une servante 3 attelée à cette balancelle 2 tout en étant suspendue à d'autres rails repérés par 4 et situés au dessous des rails portant la balancelle.

La balancelle 2 maintient le véhicule sensiblement à hauteur de la tête d'un opérateur 6 se tenant debout à proximité de la servante 3. Cette balancelle comprend un chariot 7 par lequel elle est suspendue aux rails non représentés et sur lesquels elle roule, et un socle 8 sur lequel repose le véhicule 1, ce socle étant solidarisé au chariot par un bras rigide 9.

La servante comprend elle aussi un chariot repéré par 11, qui roule sur les rails 4, la partie inférieure de ce chariot 11 étant située largement au dessus de la tête de l'opérateur 6. Elle comprend également une structure généralement verticale 12 rigidement solidaire du chariot 11, et qui descend jusqu'à hauteur des genoux de l'opérateur 6.

Cette servante comprend encore une structure dite supérieure 13 rigidement solidaire du chariot 11 et s'étendant jusqu'à hauteur du chariot 7 de la balancelle. La structure supérieure 13 et le chariot 7 portent des organes d'attelage 14 pour solidariser en translation la servante 3 à la balancelle 2.

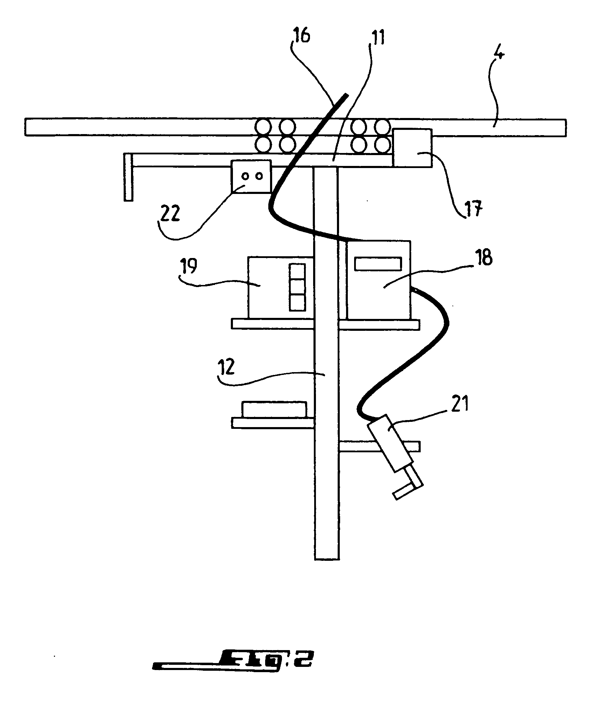

La servante 3 qui est mobile le long des rails 4 est reliée à un point fixe par un ensemble de câbles 16 suspendus aux rails 4 et pouvant se déplacer le long de ceux-ci. Comme visible dans la figure 2, elle peut être pourvue d'un moteur 17 porté par son chariot 11, pour assister son déplacement le long des rails.

Cette servante porte une unité de commande 18, encore appelée baie de vissage, et une interface opérateur 19 reliée à cette unité de commande. Une visseuse 21 est reliée à l'unité de commande 18 qui est elle-même reliée à un automate programmable industriel non représenté, par l'intermédiaire de l'ensemble de câbles 16.

Cette servante porte encore une unité 22 apte à lire à distance des informations contenues dans une étiquette programmable réinscriptible, en communiquant avec cette étiquette par radio-fréquence. Cette unité 22 est reliée à l'unité de commande 18 pour transférer dans cette unité de commande les informations lues sur l'étiquette distante.

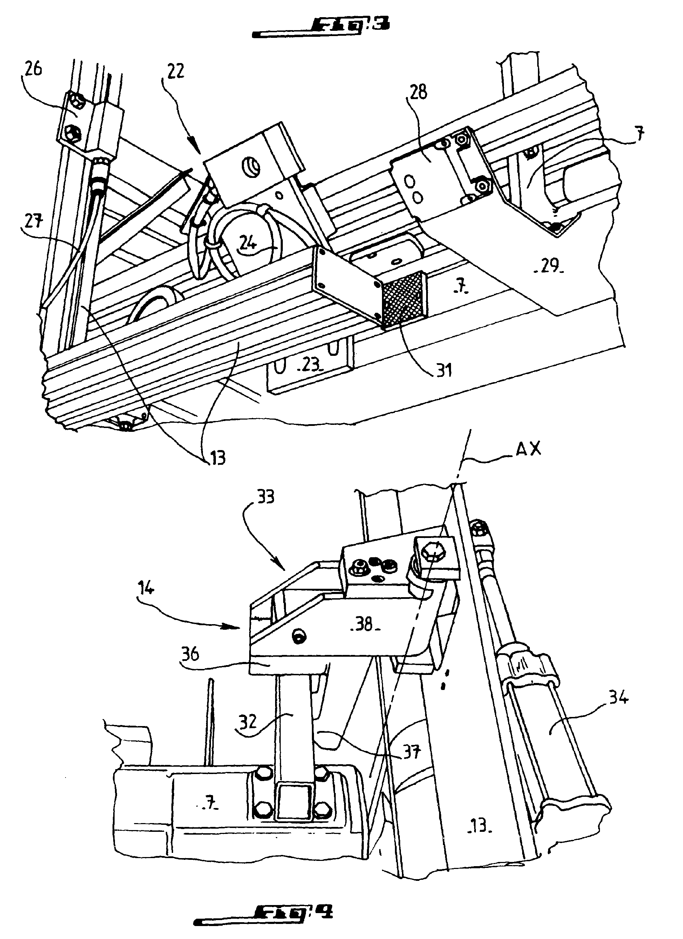

Comme visible dans la figure 3, l'unité de lecture 22 est portée par une patte 23 rigidement solidaire des éléments de la structure supérieure 13 de la servante, et elle est alimentée par et reliée à l'unité de commande 18 par un câble 24. La structure supérieure 13 porte également un détecteur optique 26 relié à et alimenté par l'unité de commande 18 par l'intermédiaire d'un autre câble 27.

L'étiquette réinscriptible 28 contenant les informations lisibles par l'unité 22 est portée par la balancelle 2, au niveau du chariot 7 de cette dernière, en étant portée par une patte 29 rigidement solidarisée aux éléments de structure de ce chariot 7 de manière à être située à la même hauteur que l'unité 22.

Le chariot 7 porte également un réflecteur 31, du type catadioptre, qui est monté à la même hauteur que le détecteur 26, pour permettre une détection de ce réflecteur 31 par le détecteur 26.

Lorsque le réflecteur 31 est situé en vis-à-vis du détecteur 26, l'étiquette réinscriptible 28 est elle aussi située en vis-à-vis de l'unité 22, et les moyens d'attelage 14 portés par la balancelle et par la servante sont eux aussi situés en vis-à-vis les uns des autres.

Dans cette situation, la servante 3 peut être attelée à la balancelle 2 grâce aux moyens d'attelage 14. Comme visible dans la figure 4, ces moyens d'attelage comprennent un bras 32 rigidement fixé au chariot 7 de la balancelle, et une fourchette mobile 33 portée par la structure supérieure 13 de la servante et actionnée par un vérin 34 qui est également porté par cette structure supérieure.

Le bras 32 est formé par un tube à section carrée qui est fixé à un élément de structure du chariot 7 en étant orienté verticalement. La fourchette mobile 33 comprend deux branches 36 et 37 aptes à entourer le bras 32, ces branches étant portées par une embase 38 solidarisée à la structure 13 en étant apte à pivoter par rapport à cette structure, autour d'un axe horizontal AX.

Le vérin 34 a une extrémité fixée à la structure supérieure 13 et une autre extrémité solidarisée à l'embase rotative 38 pour déplacer la fourchette 33. La fourchette 33 peut ainsi occuper une position verticale dans laquelle elle n'interfère pas avec le bras 32, ou une position rabattue ou horizontale, dans laquelle ses branches entourent ce bras, ce qui assure l'attelage ou l'indexage de la servante 3 à la balancelle 2, ce qui correspond à la situation de la figure 4.

Le détecteur 29 ainsi que le vérin 34 sont reliés à l'unité de commande 18 qui est ainsi en mesure de piloter le vérin pour atteler la servante à la balancelle dès que ce détecteur 29 identifie la présence du réflecteur 31.

En fonctionnement, des informations relatives au modèle de véhicule porté par la balancelle ou bien relatives à la gamme d'opérations sont d'abord inscrites sur l'étiquette 28, par exemple après installation du véhicule sur cette balancelle.

L'arrivée de la balancelle 2 au niveau de la servante 3 est détectée par le capteur 26 qui identifie la présence du réflecteur en vis-à-vis de ce capteur. Le vérin 34 est alors piloté pour abaisser la fourchette 33 autour du bras 32 afin d'atteler la servante 3 à la balancelle 2.

L'unité de lecture 22 interroge alors l'étiquette 28 pour récupérer des données représentatives du modèle du véhicule 1, ou bien directement des de la gamme d'opérations devant être effectuées au défilé.

A partir de la gamme d'opérations, l'unité de commande 18 détermine un cycle de commande et de paramétrage des outillages assurant que la gamme d'opérations à effectuer sur le véhicule sera respectée par l'opérateur.

Ce cycle de commande et de paramétrage des outillages consiste par exemple à piloter successivement deux séreuses portées par la servante et adaptées au serrage de vis de diamètres différents.

Dans ce cas, la première séreuse, destinée au serrage de plusieurs vis d'un premier diamètre est d'abord paramétrée pour générer le couple de serrage défini dans la gamme d'opérations, puis elle est énergisée, c'est-à-dire alimentée. Avantageusement, un voyant est alors allumé sur l'interface opérateur 19 pour indiquer à cet opérateur que la première visseuse est utilisable.

L'opérateur saisit alors cette séreuse et effectue les serrages correspondants, la séreuse retournant à l'unité de commande un message de serrage réussi à la fin de chaque serrage.

Lorsque toutes les vis du premier diamètre ont été serrées, l'unité de commande désénergise la première séreuse. Elle énergise alors la seconde séreuse, adaptée à un autre diamètre de vis, en paramétrant le couple de serrage à une valeur correspondant au couple spécifié dans la gamme d'opérations. Avantageusement, un voyant est alors allumé sur l'interface opérateur 19 pour indiquer à cet opérateur que la seconde visseuse est utilisable.

L'opérateur effectue alors la seconde série de serrages, la seconde séreuse retournant un message de serrage réussi à la fin de chaque serrage, en direction de l'unité de commande.

Lorsque tous les seconds serrages sont terminés, l'unité de commande désénergise la seconde séreuse.

La servante peut alors être désattelée de la balancelle, en pilotant le vérin 34 pour qu'il relève la fourchette, ceci pouvant être déclenché soit manuellement, soit automatiquement lorsque le temps alloué pour la gamme d'opérations est écoulé.

Une fois désattelée, la servante est ramenée à son point de départ sur la ligne pour être prête au traitement d'un nouveau véhicule.

La servante 3 est reliée par les câbles 16 à un automate programmable de la ligne de production, de sorte qu'elle peut retourner à cet automate un message indiquant que toutes les opérations au défilé ont effectivement été effectuées.

Dans le cas où l'opérateur ne parvient pas à effectuer toutes les opérations dans le temps alloué, la servante retourne à l'automate programmable un message indiquant que toutes les opérations n'ont pas été effectuées. Le véhicule sera alors dirigé vers un poste de retouche ou de reprise, en fin de ligne de production.

Dans l'exemple ci-dessus, la gamme d'opérations comprend seulement deux séries de serrages, mais elle peut également inclure des opérations de remplissage de fluides qui sont également pilotées et paramétrées depuis l'unité de commande 18 de manière à assurer que la gamme en question est respectée.

La gamme d'opérations en elle-même peut être directement inscrite dans l'étiquette 28, auquel cas dès lecture de cette étiquette par l'unité 22, la gamme est directement transférée et traitée par l'unité de commande 18.

Mais les informations inscrites sur l'étiquette 28 peuvent aussi comprendre principalement le modèle ou type du véhicule qui est installé sur la balancelle. Dans ce cas, les différentes gammes d'opérations peuvent être préenregistréres dans la servante ou dans l'automate auquel elle est connectée, de sorte que la gamme est alors obtenue à partir de la connaissance du modèle qui est inscrit sur l'étiquette.

L'étiquette 28 et l'unité de lecture 22 correspondent par exemple à l'étiquette réinscriptible programmable et au module de lecture commercialisés par la société Balogh. Il s'agit d'organes permettant de réaliser des inscriptions et lectures sur l'étiquette, à distance, par communication radio-fréquence.

## Revendications

1. Système comprenant une balancelle (2) destinée à porter un véhicule automobile (1) et une servante (3) portant une unité de commande (18) et un ou plusieurs outillages manuels tels que visseuse (21) ou séreuse pneumatique pilotés par cette unité de commande (18), la balancelle (2) et la servante (3) étant destinées à être suspendues à des rails (4), des organes d'attelage (14) de la servante (3) à la balancelle (2), pour qu'un opérateur (6) effectue une gamme d'opérations sur le véhicule (1) pendant qu'il avance avec la servante (3) le long des rails (4) en utilisant un ou plusieurs outillages (21) portés par la servante (3), **caractérisé en ce que** la servante (3) est équipée d'une unité (22) de lecture d'une étiquette distante (28), **en ce que** la balancelle (2) est équipée d'une étiquette (28) lisible par cette unité de lecture (22), pour transférer depuis l'étiquette (28) vers l'unité de commande (18), des données relatives au modèle du véhicule (1) porté par la balancelle (2) ou des données relatives à la gamme d'opérations devant être effectuée sur ce véhicule (1), afin de piloter le ou les outillages (21) depuis l'unité de commande (18) selon une séquence correspondant à la gamme d'opérations à effectuer.

2. Système selon la revendication 1, dans laquelle l'unité de lecture (22) communique avec l'étiquette (28) par radiofréquence.

3. Système selon la revendication 1 ou 2, comprenant un détecteur (26, 31) pour identifier la présence de la balancelle (2) au niveau de la servante (3), afin de déclencher automatiquement l'attelage de la servante à la balancelle et de déclencher automatiquement une lecture des informations contenues dans l'étiquette (28) dès que la balancelle (2) est au niveau de la servante (3).

4. Système selon la revendication 3, dans lequel le détecteur (26, 31) de présence de la balancelle (2) au niveau de la servante (3) comprend une source lumineuse et un capteur (26) portés par la servante (3) et un réflecteur porté par la balancelle (2).

5. Système selon l'une des revendications 1 à 4, dans lequel les moyens d'attelage (14) comprennent un organe mobile (33) déplacé par un actionneur (34) portés par la servante (3) l'organe (33) étant mobile entre une position d'attelage et une position libre, et dans lequel le détecteur (26), l'unité de lecture (22) et l'actionneur (34) sont reliés à l'unité de commande.

## Claims

1. A system comprising a suspended tray conveyor (2) for carrying a motor vehicle (1) and a cabinet (3) carrying a control unit (18) and one or more hand tools, such as a pneumatic screw gun (21) or screwdriver, driven by this control unit (18), the suspended tray conveyor (2) and the cabinet (3) being intended to be suspended from rails (4), members (14) for coupling the cabinet (3) to the suspended tray conveyor (2), in such a way that an operator (6) carries out a range of operations on the vehicle (1) while it moves forwards with the cabinet (3) along the rails (4), using one or more tools (21) carried by the cabinet (3), **characterised in that** the cabinet (3) is provided with a unit (22) for reading a remote label (28), **in that** the suspended tray conveyor (2) is provided with a label (28) which can be read by this reading unit (22), so as to transfer data relating to the model of the vehicle (1) carried by the suspended tray conveyor (2) or data relating to the range of operations to be carried out on this vehicle (1) from the label (28) to the control unit (18), so as to control the tool or tools (21) from the control unit (18) in a sequence corresponding to the range of operations to be carried out.

2. The system according to claim 1, wherein the reading unit (22) communicates with the label (28) by radiofrequency.

3. The system according to either claim 1 or claim 2, comprising a detector (26, 31) for identifying the presence of the suspended tray conveyor (2) at the cabinet (3) so as to trigger automatically the coupling of the cabinet to the suspended tray conveyor and to trigger automatically the reading of the information contained in the label (28) when the suspended tray conveyor (2) is at the cabinet (3).

4. The system according to claim 3, wherein the detector (26, 31) for detecting the presence of the suspended tray conveyor (2) at the cabinet (3) comprises a light source and a sensor (26) which are carried by the cabinet and a reflector which is carried by the suspended tray conveyor (2).

5. The system according to one of claims 1 to 4, wherein the coupling means (14) comprise a movable member (33) displaced by an actuator (34), these being carried by the cabinet (3), the member (33) being movable between a coupling position and a free position, and wherein the detector (26), the reading unit (22) and the actuator (34) are connected to the control unit.

## Patentansprüche

1. System umfassend ein Hängegestell (2) für das Tragen eines Kraftfahrzeugs (1) und einen Werkzeughalter (3), der eine Steuerungseinheit (18) und ein oder mehrere handbetätigte Arbeitsgeräte wie zum Beispiel Druckluftschrauber (21) oder Druckluftdrehschrauber trägt, die von dieser Steuerungseinheit (18) gesteuert werden, wobei das Hängegestell (2) und der Werkzeughalter (3) zum Aufhängen an Schienen (4) vorgesehen sind, sowie Organe zum Kuppeln (14) des Werkzeughalters (3) an das Hängegestell (2), damit eine Bedienperson (6) eine Folge von Arbeitsgängen an dem Fahrzeug (1), während es sich mit dem Werkzeughalter (3) längs der Schienen (4) vorwärts bewegt, unter Verwendung eines oder mehrerer Arbeitsgeräte (21) ausführt, die vom Werkzeughalter (3) getragen werden, **dadurch gekennzeichnet, dass** der Werkzeughalter (3) mit einer Einheit (22) zum Lesen eines entfernten Etiketts (28) ausgestattet ist, dass das Hängegestell (2) mit einem Etikett (28) ausgestattet ist, das von dieser Leseeinheit (22) gelesen werden kann, um vom Etikett (28) aus zur Steuerungseinheit (18) Daten über das Modell des Fahrzeugs (1), das von dem Hängegestell (2) getragen wird oder Daten über die Folge von Arbeitsgängen, die an diesem Fahrzeug (1) ausgeführt werden müssen, zu übertragen, um das oder die Arbeitsgeräte (21) von der Steuerungseinheit (18) aus gemäß einer Sequenz zu steuern, die der Folge der auszuführenden Arbeitsgänge entspricht.

2. System nach Anspruch 1, bei dem die Leseeinheit (22) mit dem Etikett (28) mittels Hochfrequenz kommuniziert.

3. System nach Anspruch 1 oder 2, das einen Detektor (26, 31) für das Erkennen des Vorhandenseins des Hängegestells (2) im Bereich des Werkzeughalters (3) umfasst, um das Kuppeln des Werkzeughalters an das Hängegestell automatisch auszulösen und ein Lesen der im Etikett (28) enthaltenen Informationen automatisch auszulösen, sobald sich das Hängegestell (2) im Bereich des Werkzeughalters (3) befindet.

4. System nach Anspruch 3, bei dem der Detektor (26, 31) für das Vorhandensein des Hängegestells (2) im Bereich des Werkzeughalters (3) eine Lichtquelle und einen Sensor (26), die von dem Werkzeughalter (3) getragen werden, und einen Reflektor, der von dem Hängegestell (2) getragen wird, umfasst.

5. System nach einem der Ansprüche 1 bis 4, bei dem die Kupplungsmittel (14) ein bewegliches Organ (33) umfassen, das von einem Aktuator (34), der von dem Werkzeughalter (3) getragen wird, verschoben wird, wobei das Organ (33) zwischen einer Kupplungsposition und einer freien Position beweglich ist, und bei dem der Detektor (26), die Leseeinheit (22) und der Aktuator (34) mit der Steuerungseinheit verbunden sind.
